Europäisches Patentamt

European Patent Office

Office européen des brevets

(11) Veröffentlichungsnummer: **0 213 314**
**B1**

(12) # EUROPÄISCHE PATENTSCHRIFT

(45) Veröffentlichungstag der Patentschrift:
**22.03.89**

(51) Int. Cl.⁴: **F16C 11/06**

(21) Anmeldenummer: **86108911.8**

(22) Anmeldetag: **01.07.86**

(54) **Kugelgelenk.**

(30) Priorität: **28.08.85 DE 3530633**

(43) Veröffentlichungstag der Anmeldung:
**11.03.87 Patentblatt 87/11**

(45) Bekanntmachung des Hinweises auf die Patenterteilung:
**22.03.89 Patentblatt 89/12**

(84) Benannte Vertragsstaaten:
**DE FR GB IT NL SE**

(56) Entgegenhaltungen:
**DE-A- 1 953 116**
**DE-C- 928 438**
**GB-A- 1 398 106**
**GB-A- 2 052 619**
**US-A- 3 650 552**
**US-A- 3 999 870**
**US-A- 4 353 660**

(73) Patentinhaber: **TRW Ehrenreich GmbH & Co. KG,**
**Hansa-Allee 190, D-4000 Düsseldorf 11(DE)**

(72) Erfinder: **Stemmer, Horst-Heinz, Am Kamberg 4,**
**D-4005 Meerbusch 3(DE)**
Erfinder: **Rahmede, Karl-Heinz, Drususstrasse 6,**
**D-4000 Düsseldorf 11(DE)**

(74) Vertreter: **Patentanwälte Dipl.-Ing. Alex Stenger**
**Dipl.-Ing. Wolfram Watzke Dipl.-Ing. Heinz J. Ring,**
**Kaiser-Friedrich-Ring 70, D-4000 Düsseldorf 11(DE)**

ACTORUM AG

## Beschreibung

Die Erfindung betrifft ein Kugelgelenk für Kraftfahrzeuge mit einer zwischen einem Kugelkopf und einem Gelenkgehäuse eingesetzten Lagerschale aus elastischem Kunststoff, die innen an dem Kugelkopf abgestützt ist und außen auf einstückig an den inneren Boden des Gelenkgehäuses angeformten Erhebungen aufsitzt.

Aus der US-A 3 650 552 ist bereits ein Kugelgelenk mit einer zwischen einem Gelenkgehäuse und einem Kugelkopf eingesetzten Lagerschale aus einem elastisch verformbaren Kunststoff, die an einem Ende im Gelenkgehäuse gehalten wird und mit dem anderen Ende auf dem Boden des Gelenkgehäuses aufsitzt, bekannt. Bei diesem Kugelgelenk ist die Oberfläche der Lagerschale mit Gruppen konzentrisch angeordneter zungenförmiger Federelemente versehen, welche beim Zusammenbau des Kugelgelenkes bzw. bei Belastung elastisch einfedern. Durch die Vorspannung werden Fertigungstoleranzen ausgeglichen und ist eine spielfreie Lagerung auch bei einer gewissen Abnutzung in der Kugellauffläche der Lagerschale möglich. Die Nachgiebigkeit der Lagerschale gestattet zudem ein weiches Auffangen von Stößen. Um dieses Ergebnis zu erreichen, muß bei dem bekannten Kugelgelenk ein Lagerschalengrundkörper, der so bemessen ist, daß er sich im Betrieb starr verhält, mit zusätzlichen Federelementen versehen werden, die ein axiales Einfedern der Lagerschale ermöglichen. Das bedeutet eine relativ großvolumige Lagerschale. Zudem darf die Lagerschale nur seitlich geführt werden und liegt nur mit den Stirnflächen ihrer Federelemente fest auf dem Innenmantel des Gelenkgehäuses auf. Das bedeutet, daß nur geringe Drehmomente übertragen werden können, ohne daß die Lagerschale im Gelenkgehäuse gleitet.

Aus der DE-A 1 953 116 ist ein Kugelgelenk mit einer einseitig im Gelenkgehäuse fest eingespannten Lagerschale aus einem harten Kunststoff bekannt, die mit kleinen Erhebungen an ihrem Stirnende an eine Schulterfläche des Gelenkgehäuses gedrückt wird. Die Erhebungen werden beim Zusammenbau des Kugelgelenkes plastisch verformt und gewährleisten so einen Ausgleich von Fertigungstoleranzen der Bauelemente und eine relativ gleichmäßige Anlage der Lagerschale gegen den Kugelkopf. Dieses Kugelgelenk ist nicht dazu geeignet, Stöße elastisch aufzufangen. Die stoßförmige Belastung führt vielmehr zur weiteren plastischen Verformung der Erhebungen mit einhergehenden Auswirkungen auf die Betriebseigenschaften des Kugelgelenkes. Zur Sicherung der Lagerschale gegen ein Verdrehen im Gelenkgehäuse ist bei diesem Kugelgelenk zudem eine relativ aufwendige Einspannkonstruktion vorgesehen.

Aus der DE-C 928 438 ist ein Kugelgelenk mit einer inneren Lagerschale bekannt, die unter Vorspannung an ringförmig angeordneten, spitzen Vorsprüngen auf der Innenseite des Gehäusedeckels anliegt. Beim Anziehen des Gehäusedeckels flachen die Vorsprünge ab, wodurch das Lagerspiel ein- bzw. nachgestellt werden kann.

Wechselbelastungen des Kugelgelenkes können jedoch zur plastischen Verformung der Vorsprünge führen und eine Erhöhung des Lagerspieles bewirken. Darüber hinaus ist die Lagerschale nicht gegen ein Verdrehen im Gelenkgehäuse gesichert, so daß die Betriebskennwerte des Kugelgelenkes Schwankungen unterliegen und ein erhöhter Verschleiß zu besorgen ist.

Rippenförmige Einrichtungen an Lagerschalen in Gelenkgehäusen, die dem Ausgleich des Lagerspiels dienen, zeigen beispielsweise die GB-A 2 052 619, die GB-A 1 398 106, die US-A 4 353 660 und die US-A 3 999 870.

Davon ausgehend liegt der Erfindung die Aufgabe zugrunde, ein Kugelgelenk mit einer platzsparend bemessenen Lagerschale zu schaffen, die durch elastische Verformung und eine verdrehsichere Festlegung im Gelenkgehäuse engtolerierte Betriebskennwerte ermöglicht, das Auftreten eines Lagerspiels verhindert und stoßweise Belastungen elastisch dämpft.

Zur technischen Lösung dieser Aufgabe wird vorgeschlagen, daß die Erhebungen und die zwischen den Erhebungen angeordneten Hohlräume des inneren Bodens des Gelenkgehäuses starre Stütz- und Anlageflächen für die elastisch verformbare Lagerschale bilden und daß radiale Begrenzungsflächen der Erhebungen die bei vorgespanntem Kugelkopf in die Hohlräume hineinverformte Lagerschale seitlich abstützen.

Bei einem nach dieser technischen Lehre ausgebildeten Kugelgelenk liegt die Lagerschale bereichsweise auf den starren Stützflächen der Erhebungen auf und ist die Lagerschale bereichsweise elastisch in die Hohlräume zwischen den Erhebungen hineinverformbar. Die maximale Verformbarkeit der Lagerschale ist ungefähr durch ihre Anlage an Anlageflächen der Hohlräume im inneren Boden gegeben. Maßschwankungen bei der Fertigung von Lagerschale, Kugelkopf und Gelenkgehäuse können so durch elastische Verformung der Lagerschale ausgeglichen werden, wobei die Anlageflächen eine Verformung der Lagerschale bis zu einer Materialschädigung verhindern.

Die Vorspannung der Lagerschale und ihre Anlage auf dem Kugelkopf werden somit maßgeblich durch ihre elastischen Verformungseigenschaften und die Gestaltung des inneren Bodens des Gelenkgehäuses bestimmt, so daß die Einhaltung enger Toleranzen des Drehmomentes möglich ist. Die elastischen Rückstellkräfte der vorgespannten Lagerschale verhindern zudem ein im Betrieb durch Abnutzung in der Kugellauffläche bewirktes Lagerspiel. Im Betrieb auftretende Stöße werden insoweit elastisch aufgefangen, als dies die Elastizitätseigenschaften des Lagerschalenmaterials und die Bemessung und Anordnung der Erhebungen im inneren Boden des Gelenkgehäuses gestatten. Die Lagerschale ist zudem verdrehsicher im Gelenkgehäuse gelagert, da die im Bereich der Hohlräume des inneren Bodens des Gelenkgehäuses durch Vorspannung der Lagerschale erzeugten Ausbuchtungen der Lagerschalenoberfläche von den Erhebungen seitlich begrenzt werden. Sämtliche Vorteile

werden mit einer einfach gestalteten Lagerschale erzielt, die kompakt aufgebaut ist und deren Wandstärke sich nur geringfügig verändert.

Bei einer Ausgestaltung der Erfindung ist vorgesehen, daß die Erhebungen im inneren Boden des Gelenkgehäuses aus einer ebenen Fläche heraustragen, die einfach herstellbar ist und an der die Lagerschale zentrierbar ist.

Bei einer weiteren Ausgestaltung ist vorgesehen, eine Innenschräge des Gelenkgehäuses bis zum inneren Boden des Gelenkgehäuses fortzusetzen, wodurch ein zusätzlicher Beitrag zur Verdrehsicherung geleistet wird.

Bei einer weiteren Ausgestaltung ragen die Erhebungen im inneren Boden des Gelenkgehäuses aus einer Kugelschale heraus, wodurch sehr große Verformungsbereiche geschaffen werden.

Bei einer weiteren Ausgestaltung ist die Lagerschale zweiteilig ausgebildet, so daß eine Lagerschale hinsichtlich der Elastizität und die andere Lagerschale hinsichtlich der Gleiteigenschaften optimiert werden kann.

Bei einer weiteren Ausgestaltung sind die Erhebungen radial zur Zapfenachse verlaufende, symmetrisch im Boden des Gelenkgehäuses angeordnete Rippen, wodurch eine sehr gleichmäßige Abstützung der Lagerschale erreicht wird. Besonders vorteilhaft ist es, wenn die Rippen mit wachsendem radialen Abstand von der Zapfenachse an Breite zunehmen, da dann eine relativ gleichmäßige Verformung der Lagerschale erreicht wird. Zur gezielten Beeinflussung der elastischen Verformung der Lagerschale können schließlich symmetrisch im Boden des Gelenkgehäuses angeordnete Nocken vorgesehen sein.

Weitere Einzelheiten und Vorteile des Gegenstandes der Erfindung ergeben sich aus der nachfolgenden Beschreibung der zugehörigen Zeichnungen, in denen bevorzugte Ausführungsformen dargestellt worden sind. In den Zeichnungen zeigen:

Fig. 1 ein Kugelgelenk mit Erhebungen auf einer ebenen Fläche im montierten Zustand und im Längsschnitt;

Fig. 2 eine mögliche Ausgestaltung des inneren Bodens des Gelenkgehäuses mit Erhebungen auf einer ebenen Fläche in vergrößertem Maßstab;

Fig. 3 der innere Boden des Gelenkgehäuses aus Fig. 1 in vergrößertem Maßstab;

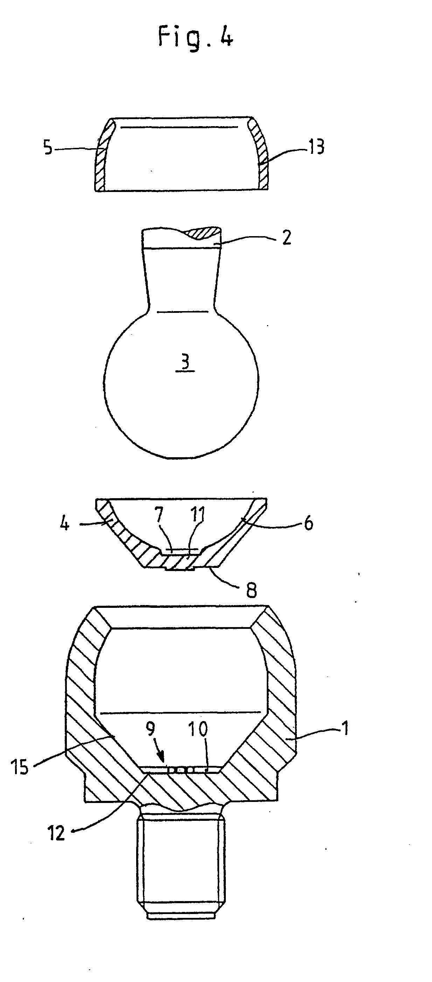

Fig. 4 das Kugelgelenk aus Fig. 1 als Sprengbild;

Fig. 5 ein Kugelgelenk mit Erhebungen auf einer Kugelschale im montierten Zustand und im Längsschnitt;

Fig. 6 eine mögliche Ausgestaltung des inneren Bodens des Gelenkgehäuses mit Erhebungen auf einer Kugelschale;

Fig. 7 der innere Boden des Gelenkgehäuses aus Fig. 5;

Fig. 8 das Kugelgelenk aus Fig. 5 als Sprengbild.

In ein Gelenkgehäuse 1 ist ein Kugelzapfen 2 mit seinem Kugelkopf 3 unter Zwischenlage einer inneren, halbsphärischen Lagerschale 4 und einer äußeren, halbsphärischen Lagerschale 5 eingesetzt. In der Kugelauflfläche 6 der inneren Lagerschale 4 befindet sich ein Hohlraum, der als Fettreservoir 7 genutzt werden kann.

Die Stirnseite 8 der inneren Lagerschale 4 sitzt teilweise auf dem inneren Boden 9 des Gelenkgehäuses 1 auf, wobei sie von den Stützflächen der starren Rippen 10 des inneren Bodens 9 abgestützt wird und mit einem Zapfen 11 in einem rippenfreien Hohlraum 12 im Zentrum des inneren Bodens 9 des Gelenkgehäuses 1 zentriert wird. Die Rippen 10 im inneren Boden 9 des Gelenkgehäuses 1 ragen aus einer ebenen Fläche heraus.

Bei der Montage werden die Lagerschalen 4, 5 vorgespannt, wobei sich die innere Lagerschale 4 im Bereich ihrer Stirnseite 8 in die Hohlräume 12 des inneren Bodens 9 hinein elastisch verformt. Die Rippen 10 und die Hohlräume 12 sind so angeordnet und bemessen, daß die elastische Verformung der inneren Lagerschale 4 Fertigungstoleranzen von Kugelkopf 3, Lagerschalen 4, 5 und Gelenkgehäuse 1 ausgleicht. Zudem kann durch geeignete Wahl des Lagerschalenwerkstoffes und die geeignete Gestaltung des inneren Bodens 9 erreicht werden, daß Stoßbelastungen im Betrieb durch eine zusätzliche elastische Verformung der inneren Lagerschale 4 aufgefangen werden, wobei die Lagerschale bei Überlast an den starren Anlageflächen bildenden Wänden der Hohlräume zur Anlage kommt.

Stets ist eine gewisse Mindestverformung der inneren Lagerschale 4 im Bereich des inneren Bodens 9 erwünscht, damit ein im Betrieb auftretendes Lagerspiel durch Abnutzung in den Kugelauflfflächen 6, 13 der Lagerschalen 4, 5 durch elastische Rückstellkräfte der vorgespannten inneren Lagerschale 4 ausgeglichen wird. Zudem wird die Lagerschale 4 durch die Ausbauchungen im Bereich der Hohlräume 12 des inneren Bodens 9 von den seitlich an den Ausbauchungen anliegenden radialen Begrenzungsflächen 14 der Rippen 9 geführt.

Die innere Lagerschale 4 haftet an ihrem Außenmantel an der Innenschräge 15 des Gelenkgehäuses 1, wodurch ein zusätzlicher Beitrag zur Verdrehsicherung geleistet wird.

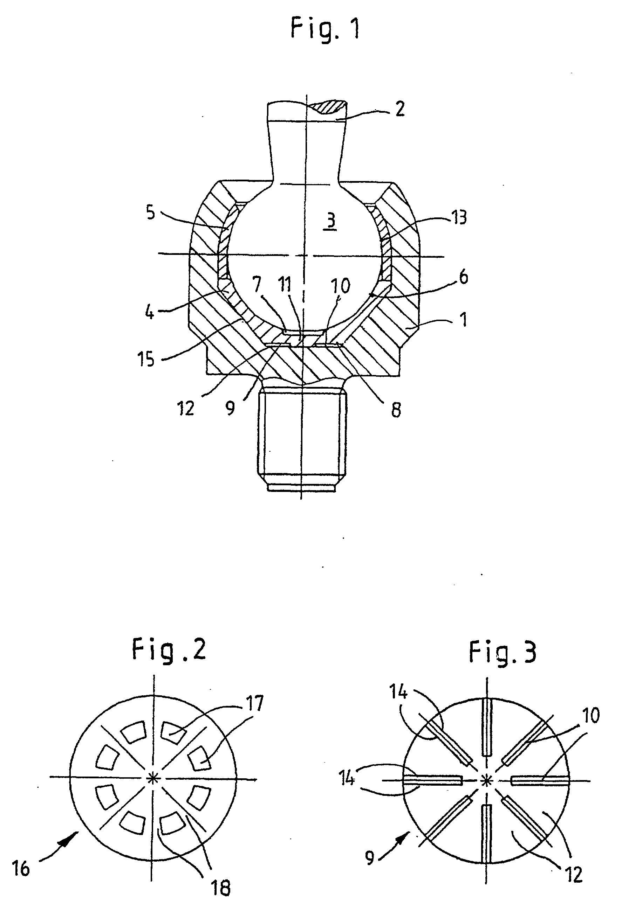

Es sind viele Ausgestaltungen des inneren Bodens des Gelenkgehäuses denkbar. Wie die Fig. 2 zeigt, kann der innere Boden 16 auch mit Nocken 17 versehen sein, die aus einer ebenen Fläche herausragen und im Zusammenspiel mit den Hohlräumen 18 eine ähnliche Beeinflussung der Eigenschaften des Kugelgelenkes gestatten, wie dies bereits oben geschildert wurde.

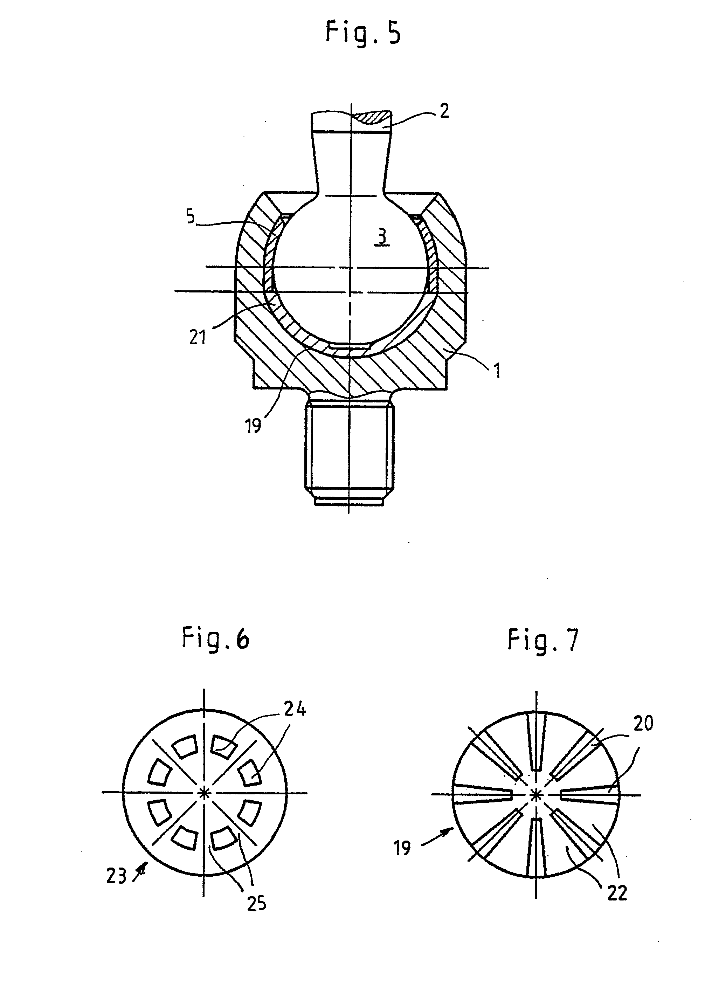

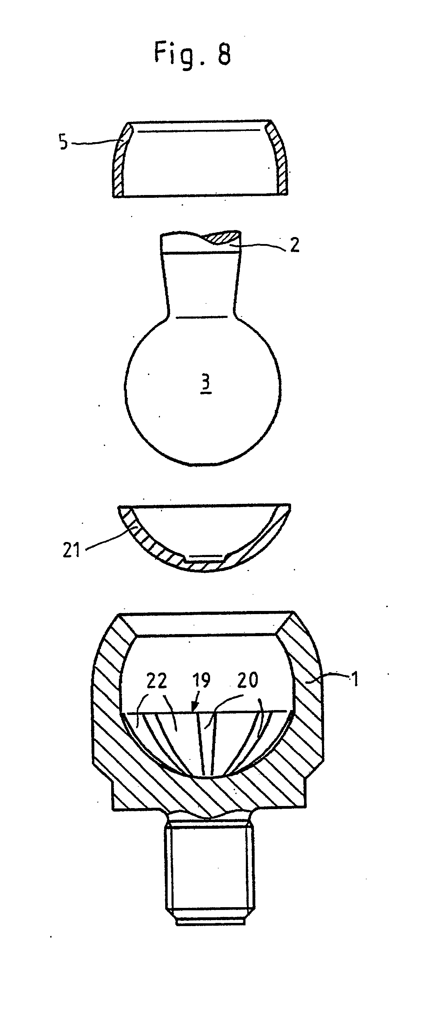

Wie die Fig. 5, 7 und 8 zeigen, kann der innere Boden 19 des Gelenkgehäuses 1 auch mit Rippen 20 versehen sein, die aus einer Kugelschale herausragen. Da der innere Boden 19 den gesamten Mantel der inneren Lagerschale 21 umgibt, kann sich diese in verstärktem Maße elastisch verformen. Dies ermöglicht ein sehr weiches Kugelgelenk mit einer weiterhin verbesserten Verdrehsicherung.

Bei ihrer Verformung wird die innere Lagerschale 21 an ihrem Mantel bereichsweise von meridional verlaufenden Rippen 20 abgestützt und bereichsweise in die Hohlräume 22 des inneren Bodens 19 hinein elastisch verformt. Wie die Fig. 7 zeigt, sind die Rippen 20 im Zentrum der Kugelschale schmaler als am Rand, so daß eine relativ gleichmäßige Durchbiegung der inneren Lagerschale 21 erreicht wird.

Wie die Fig. 6 zeigt, kann der innere Boden 23 auch mit Nocken 24 versehen sein, die aus einer Kugelschale herausragen und im Zusammenspiel mit den Hohlräumen 25 eine ähnliche Beeinflussung der Eigenschaften des Kugelgelenkes gestatten, wie bereits oben geschildert.

Wie die vorausgegangenen Erläuterungen zeigen, ist ein erfindungsgemäßes Kugelgelenk einfach im Aufbau, wirtschaftlich in der Herstellung und kann auch harte Betriebsbedingungen langfristig ertragen.

Bezugszeichenliste

1 Gelenkgehäuse
2 Kugelzapfen
3 Kugelkopf
4 Lagerschale (innere)
5 Lagerschale (äußere)
6 Kugellauffläche
7 Fettreservoir
8 Stirnseite
9 Boden (innerer)
10 Rippen
11 Zapfen
12 Hohlraum
13 Kugellauffläche
14 Begrenzungsfläche
15 Innenschräge
16 Boden (innerer)
17 Nocken
18 Hohlraum
19 Boden (innerer)
20 Rippen
21 Lagerschale (innere)
22 Hohlraum
23 Boden (innerer)
24 Nocken
25 Hohlraum

Patentansprüche

1. Kugelgelenk für Kraftfahrzeuge mit einer zwischen einem Kugelkopf (3) und einem Gelenkgehäuse (1) eingesetzten Lagerschale (4, 21) aus elastischem Kunststoff, die innen an dem Kugelkopf (3) abgestützt ist und außen auf einstückig an den inneren Boden (9, 16, 19, 23) des Gelenkgehäuses (1) angeformten Erhebungen (10, 17, 20, 24) aufsitzt, dadurch gekennzeichnet, daß die Erhebungen (10, 17, 20, 24) und die zwischen den Erhebungen (10, 17, 20, 24) angeordneten Hohlräume (12, 18, 22, 25) des inneren Bodens (9, 16, 19, 23) des Gelenkgehäuses (1) starre Stütz- und Anlageflächen für die elastisch verformbare Lagerschale (4, 21) bilden und daß radiale Begrenzungsflächen der Erhebungen (10, 17, 20, 24) die bei vorgespanntem Kugelkopf (3) in die Hohlräume (12, 18, 22, 25) hineinverformte Lagerschale (4, 21) seitlich abstützen.

2. Kugelgelenk nach Anspruch 1, dadurch gekennzeichnet, daß die Erhebungen (10, 17) im inneren Boden (9, 16) des Gelenkgehäuses (1) aus einer ebenen Fläche herausragen.

3. Kugelgelenk nach Anspruch 2, dadurch gekennzeichnet, daß eine Innenschräge (15) des Gelenkgehäuses (1) bis zum inneren Boden (9) des Gelenkgehäuses (1) fortgesetzt ist.

4. Kugelgelenk nach Anspruch 1, dadurch gekennzeichnet, daß die Erhebungen (20, 24) im inneren Boden (19, 23) des Gelenkgehäuses (1) aus einer Kugelschale herausragen.

5. Kugelgelenk nach einem der Ansprüche 1 bis 4, dadurch gekennzeichnet, daß die Lagerschale (4, 5; 21, 5) zweiteilig ausgebildet ist.

6. Kugelgelenk nach einem der Ansprüche 1 bis 5, dadurch gekennzeichnet, daß die Erhebungen (10, 20) radial zur Zapfenachse verlaufende, symmetrisch im Boden des Gelenkgehäuses (1) angeordnete Rippen (10, 20) sind.

7. Kugelgelenk nach Anspruch 6, dadurch gekennzeichnet, daß die Rippen (20) mit wachsendem radialen Abstand von der Zapfenachse an Breite zunehmen.

8. Kugelgelenk nach einem der Ansprüche 1 bis 5, dadurch gekennzeichnet, daß die Erhebungen (17, 24) symmetrisch im Boden des Gelenkgehäuses (1) angeordnete Nocken (17, 24) sind.

Claims

1. Ball and socket joint for motor vehicles having a bearing shell (4, 21) made of resilient plastic which is inserted between a ball head (3) and a joint housing (1) and is braced internally against the ball head (3) and rests externally on elevations (10, 17, 20, 24) formed integrally on the inner base (9, 16, 19, 23) of the joint housing (1), characterized in that the elevations (10, 17, 20, 24) and the cavities (12, 18, 22, 25) of the inner base (9, 16, 19, 23) of the joint housing (1) which are arranged between the elevations (10, 17, 20, 24) form rigid bracing and contact surfaces for the resiliently deformable bearing shell (4, 21), and that radial boundary surfaces of the elevations (10, 17, 20, 24) brace laterally the bearing shell (4, 21) which is deformed into the cavities (12, 18, 22, 25) when the ball head (3) is pretensioned.

2. Ball and socket joint according to Claim 1 characterized in that the elevations (10, 17) in the inner base (9, 16) of the joint housing (1) project out of a plane surface.

3. Ball and socket joint according to Claim 2, characterized in that an inner bevel (15) of the joint housing (1) is prolonged as far as the inner base (9) of the joint housing (1).

4. Ball and socket joint according to Claim 1, characterized in that the elevations (20, 24) in the inner base (19, 23) of the joint housing (1) project out of a ball shell.

5. Ball and socket joint according to one of Claims 1 to 4, characterized in that the ball shell (4, 5; 21, 5) is of two-part construction.

6. Ball and socket joint according to one of Claims 1 to 5, characterized in that the elevations (10, 20) are ribs (10, 20) extending radially to the spigot axis and arranged symmetrically in the base of the joint housing (1).

7. Ball and socket joint according to Claim 6, characterized in that the ribs (20) increase in width with increasing radial distance from the spigot axis.

8. Ball and socket joint according to one of Claims 1 to 5, characterized in that the elevations (17, 24) are cams (17, 24) arranged symmetrically in the base of the joint housing (1).

**Revendications**

1. Articulation sphérique pour véhicules automobiles, comportant une coquille de coussinet (4, 21) en matière synthétique élastique logée entre une tête sphérique (3) et un bâti d'articulation (1) et qui s'appuie intérieurement sur la tête sphérique (3) et repose extérieurement sur des protubérances (10, 17, 20, 24) modelées d'une pièce sur le fond interne (9, 16, 19, 23) du bâti de l'articulation (1), caractérisée en ce que les protubérances (10, 17, 20, 24) et les cavités (12, 18, 22, 25), situées entre celles-ci (10, 17, 20, 24), du fond interne (9, 16, 19, 23) du bâti d'articulation (1) constituent pour la coquille de coussinet (4, 21) déformable élastiquement des surfaces rigides d'appui et de mise en place et en ce que les périphéries radiales des protubérances (10, 17, 20, 24) supportent latéralement la coquille de coussinet (4, 21) déformée vers l'intérieur des cavités (12, 18, 22, 25) avec une tête sphérique précontrainte (3).

2. Articulation sphérique selon la revendication 1, caractérisée en ce que les protubérances (10, 17) dans le fond interne (9, 16) du bâti d'articulation (1) font saillie d'une surface plane.

3. Articulation sphérique selon la revendication 2, caractérisée en ce qu'un chanfrein interne (15) du bâti d'articulation (1) est prolongé jusqu'au fond interne (9) de celui-ci (1).

4. Articulation sphérique selon la revendication 1, caractérisée en ce que les protubérances (20, 24) dans le fond interne (19, 23) du bâti d'articulation (1) font saillie d'une coquille sphérique.

5. Articulation sphérique selon l'une des revendications 1 à 4, caractérisée en ce que la coquille de coussinet (4, 5; 21, 5) est en deux parties.

6. Articulation sphérique selon l'une des revendications 1 à 5, caractérisée en ce que les protubérances (10, 20) sont des nervures (10, 20), radiales par rapport à l'axe du pivot, disposées symétriquement dans le fond du bâti d'articulation (1).

7. Articulation sphérique selon la revendication 6, caractérisée en ce que la largeur des nervures (20) augmente en s'éloignant radialement de l'axe du pivot.

8. Articulation sphérique selon l'une des revendications 1 à 5, caractérisée en ce que les protubérances (17, 24) sont des mentonnets (17, 24) disposés symétriquement dans le fond du bâti d'articulation (1).

EP 0 213 314 B1

# Fig. 1

# Fig. 2

# Fig. 3

Fig. 4

# Fig. 5

2

5

3

21

19

1

# Fig. 6

24

23

25

# Fig. 7

20

19

22

# Fig. 8